# EUROPÄISCHE PATENTANMELDUNG

(11) **EP 2 829 464 A1**
(43) Veröffentlichungstag der Anmeldung: **28.01.2015**
(21) Anmeldenummer: 14169772.2
(22) Anmeldetag: 26.05.2014
(51) Int. Cl.: B62K 21/10, B62K 21/08

(54) **Fahrrad mit elektrischem Lenkeingriff sowie Verfahren zur Stabilisierung des Fahrrads sowie Verfahren zur taktilen Informationsübermittlung an den Fahrer**

(30) Priorität: 25.07.2013 DE 102013214517
(71) Anmelder: ROBERT BOSCH GMBH, 70442 Stuttgart (DE)
(72) Erfinder: Dackermann, Tim, 72074 Tuebingen (DE); Doelling, Rolando, 72379 Hechingen (DE)

(57) **Zusammenfassung**

Die vorliegende Erfindung betrifft ein Fahrrad, umfassend eine Lenkeranordnung (20) mit einem Lenker (21), einen ersten elektrischen Antrieb (12), welcher eine motorisch unterstützte Schwenkbewegung des Lenkers (21) ermöglicht, eine Sensoreinrichtung (14), und eine Steuereinheit (10), welche eingerichtet ist, den ersten elektrischen Antrieb (12) in Abhängigkeit von Signalen der Sensoreinrichtung (14) derart anzusteuern, dass ein Lenkeingriff mittels des ersten elektrischen Antriebs (12) ausführbar ist und/oder die Bandbreite des Informationsflusses an den Fahrer durch Nutzen des taktilen Kanals durch Mikrovibration des Lenkers in Gefahrensituationen und/oder rein informativ erhöht..

## Beschreibung

### Stand der Technik

Die vorliegende Erfindung betrifft ein Fahrrad, welches zur Stabilisierung des Fahrrads einen elektrischen Lenkeingriff mittels eines elektrischen Antriebs ausführt, sowie ein Verfahren zur Stabilisierung von Lenkbewegungen des Fahrrads sowie Verfahren zur taktilen Informationsübermittlung an den Fahrer zur Gefahrindikation bzw. informativ über Fahrzustände.

Fahrräder sind aus dem Stand der Technik in unterschiedlichen Ausgestaltungen bekannt und weisen beispielsweise eine Lenkanordnung mit einem Lenker und eine Gabel auf, wobei der Lenker an einem Gabelschaft angeordnet ist und der Gabelschaft an einem Lager an einem Rahmen des Fahrzeugs drehbar gelagert ist. Bei zu heftigen Lenkbewegungen kann es hierbei zu einem Sturz kommen. Ferner sind auch Fahrräder mit elektrischen Antrieben bekannt, welche beispielsweise als sogenannte Pedelecs ausgebildet sein können, bei dem der elektrische Antrieb nur in Verbindung mit einem Tretvorgang des Fahrers das Fahrrad gegebenenfalls antreibt. Hierbei ist insbesondere eine Variante, bei dem der elektrische Fahrradantrieb im Bereich des Tretlagers angeordnet ist, von großem Interesse (Mittelmotorkonzept). Auch bei derartigen Fahrrädern kann die oben erläuterte Sturzproblematik auftreten. Ferner weisen Fahrräder mit elektrischem Hilfsantrieb manchmal eine sogenannte Schiebehilfe auf. Die Schiebehilfe erlaubt dabei einen reinen Antrieb durch den elektrischen Antrieb bis zu einer vorgeschriebenen Höchstgeschwindigkeit, z.B. 6 km/h. Hierdurch kann das Fahrrad beispielsweise einfach aus einer Tiefgarage oder dergleichen hochgeschoben werden. Zur Aktivierung der Schiebehilfe muss jedoch häufig ein Knopf oder dergleichen gedrückt gehalten werden, woraus eine eingeschränkte Handhabbarkeit des Fahrrads resultiert. Auch kann es vorkommen, dass bei ungeübten Fahrern und/oder älteren Menschen ein zu langsames Anfahren des Fahrrads zu Schlingerbewegungen führt. Auch dies kann zu einem Sturz führen. Ferner ist bei Fahrrädern bisher noch kein taktiles Feedback bzw. keine taktile Informationsübermittlung für den Fahrer in Gefahrsituationen oder informativ über Fahrzustände bekannt.

### Offenbarung der Erfindung

Das erfindungsgemäße Fahrrad mit den Merkmalen des Anspruchs 1 hat dem gegenüber den Vorteil, dass zu starke Lenkbewegungen des Fahrers, welche zu einem Sturz führen könnten, automatisch ausgeglichen werden, wodurch ein Sturz und eine gefährliche Situation für den Fahrer vermieden werden kann. Dies wird erfindungsgemäß dadurch erreicht, dass das Fahrrad eine Lenkanordnung mit einem Lenker sowie einen ersten elektrischen Antrieb umfasst, welcher eine motorisch unterstützte Lenkbewegung der Lenkanordnung ermöglicht. Ferner ist eine Sensoreinrichtung und eine Steuereinheit vorgesehen, wobei die Steuereinheit eingerichtet ist, den ersten elektrischen Antrieb an der Lenkanordnung in Abhängigkeit von Signalen der Sensoreinrichtung derart zu steuern, dass ein Lenkeingriff mittels des ersten elektrischen Antriebs ausführbar ist. Hierdurch kann gefährlichen Lenkbewegungen automatisch entgegengewirkt werden, so dass ein Sturz mit dem Fahrrad vermieden werden kann. Auch kann einem Verspringen des Lenkers, wie beispielsweise beim Wegrutschen über einen Stein, entgegengewirkt werden. Der Eingriff erfolgt erfindungsgemäß dabei automatisch, sobald die Steuereinheit erkennt, dass aufgrund der erhaltenen Sensorsignale eine gefährliche Fahrsituation vorliegt, in welcher ein automatisierter Lenkeingriff notwendig ist.

Die Unteransprüche zeigen bevorzugte Weiterbildungen der Erfindung.

Der erste elektrische Antrieb ist vorzugsweise an einem Lenkerlager angeordnet. Hierdurch kann ein besonders kompakter Aufbau erreicht werden und eine direkte Gegenlenkbewegung ausgeführt werden.

Weiter bevorzugt umfasst die Sensoreinrichtung einen Beschleunigungssensor, welcher vorzugsweise eine Beschleunigung in eine oder mehrere Achsen aufnimmt, und/oder ein Lagesensor, insbesondere ein Lenkwinkelsensor, welcher einen Einschlag der Lenkanordnung ermittelt. Die Steuereinheit kann dann vorzugsweise eingerichtet sein, die gefährliche Situation, basierend auf einem oder mehreren Sensorsignalen, zu bestimmen und einzugreifen.

Weiter bevorzugt umfasst das Fahrrad ferner eine Vibrationseinrichtung. Die Vibrationseinrichtung ermöglicht dabei ein Vibrieren des Lenkers. Hierdurch kann das Fahrrad dem Fahrer eine taktile Rückkopplung beispielsweise über einen Fahrzustand und eine kritische Fahrsituation geben. Die Vibrationseinrichtung ist vorzugsweise direkt am Lenker angeordnet. Alternativ ist die Vibrationseinrichtung an einer Gabel, insbesondere an einem Gabelschaft, angeordnet. Besonders bevorzugt ist die Vibrationseinrichtung in den ersten elektrischen Antrieb integriert, welcher somit gleichzeitig eine Ausgleichslenkbewegung ausführen, als auch die Vibrationseinrichtung betätigen kann, oder die Vibration selbst erzeugt, z. B. durch schnelles Hin- und HerBewegen mit sehr kleinen Amplituden, sodass die eigentliche Lenkbewegung nicht beeinflusst wird. Das Vibrieren erhöht die Bandbreite des Informationsflusses an den Fahrer durch Nutzen des taktilen Kanals durch Mikrovibration des Lenkers in Gefahrensituationen und/oder rein informativ.

Gemäß einer weiteren bevorzugten Ausgestaltung der vorliegenden Erfindung ist das Fahrrad ein Elektrofahrrad mit einem zweiten elektrischen Antrieb, welcher mit einer Abtriebseinrichtung des Fahrrads, beispielsweise einer Kette oder dergleichen, verbindbar ist. Das Elektrofahrrad ist vorzugsweise ein Pedelec. Besonders bevorzugt ist der zweite elektrische Antrieb im Bereich des Tretlagers angeordnet.

Weiter bevorzugt ist die Steuereinheit eingerichtet, sowohl den ersten elektrischen Antrieb für den Lenkeingriff als auch den zweiten elektrischen Antrieb für den Vortrieb des Elektrofahrrads zu steuern. Hierdurch kann insbesondere die Bauteileanzahl reduziert werden. Alternativ ist in jedem der elektrischen Antriebe jeweils eine separate Steuereinheit angeordnet, vorzugsweise in das Gehäuse der elektrischen Antriebe integriert. Weiter bevorzugt ist eine gemeinsame Stromversorgungseinrichtung für den ersten und zweiten elektrischen Antrieb vorgesehen.

Gemäß einer weiteren bevorzugten Ausgestaltung der Erfindung umfasst das Elektrofahrrad vorzugsweise eine Schiebehilfe mit einer Betätigungseinrichtung. Hierbei erfolgt bei Betätigung der Betätigungseinrichtung ein elektrisches Antreiben des Fahrrads mittels des zweiten elektrischen Antriebs bis zu einer vorbestimmten Geschwindigkeit, z.B. 6 km/h. Da gleichzeitig mit der Schiebehilfe auch der erfindungsgemäße elektrische Lenkeingriff vorhanden ist, kann ein Schlingern oder unerwünschte Bewegungen mit dem Elektrofahrrad während des Schiebebetriebs vermieden werden, da die Schiebehilfe häufig einhändig betätigt wird.

Ferner betrifft die vorliegende Erfindung ein Verfahren zur Stabilisierung von Lenkbewegungen eines Fahrrads, um Stürze und gefährliche Situationen während der Nutzung des Fahrrads zu vermeiden. Das Verfahren umfasst die Schritte des Erfassens einer kritischen Fahrsituation infolge einer erfolgten Lenkbewegung und des Ausführens einer automatischen Gegenbewegung zu der erfassten Lenkbewegung, wobei die Gegenbewegung mittels eines mit einer Lenkanordnung des Fahrrads verbundenen ersten elektrischen Antriebs ausgeführt wird. Hierdurch kann ein Unfallrisiko für einen Nutzer des Fahrrads signifikant reduziert werden.

Das erfindungsgemäße Verfahren erfasst kritische Fahrsituationen vorzugsweise mittels einer Sensoreinrichtung, insbesondere einem Beschleunigungssensor und/oder einem Lagesensor.

Gemäß einer weiteren bevorzugten Ausgestaltung des erfindungsgemäßen Verfahrens wird einem Fahrer eine kritische Fahrsituation infolge einer Lenkbewegung oder einem Rutschen oder einem Pendeln oder dergleichen durch ein Vibrieren am Lenker angezeigt. Besonders bevorzugt wird dem Fahrer kurz vor Erreichen der kritischen Fahrsituation durch eine Vibration am Lenker die kritische Fahrsituation angedeutet, so dass der Fahrer noch vor dem Eingreifen des ersten elektrischen Antriebs zum Lenkausgleich selbst noch manuell eine Gegenlenkung ausführen kann. Alternativ kann das Verfahren auch nur das Vibrieren ohne aktiven Lenkeingriff kurz vor kritischen Fahrsituationen beinhalten.

Besonders bevorzugt ist das Fahrrad des erfindungsgemäßen Verfahrens ein Elektrofahrrad mit einem zweiten elektrischen Antrieb zum Antreiben des Fahrrads. Es ist dabei bevorzugt eine gemeinsame Steuereinheit für den ersten und zweiten elektrischen Antrieb vorgesehen, wobei die Steuereinheit bei einer erfolgten kritischen Lenkbewegung eine Leistung des zweiten elektrischen Antriebs zum Antreiben des Elektrofahrrads reduziert, falls dieser zugeschaltet ist, oder den zweiten elektrischen Antrieb vollständig abschaltet.

Vorzugsweise umfasst das Elektrofahrrad ferner eine Schiebehilfe, wobei das erfindungsgemäße Verfahren auch bei Nutzung der Schiebehilfe verwendet wird.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Fahrrads gemäß einem ersten Ausführungsbeispiel der Erfindung,
- Figur 2: eine schematische Draufsicht des Fahrrads von Figur 1 mit angedeutetem Lenkwinkelanschlag und
- Figur 3: eine schematische Darstellung eines Fahrrads gemäß einem zweiten Ausführungsbeispiel der Erfindung.

### Bevorzugte Ausführungsformen der Erfindung

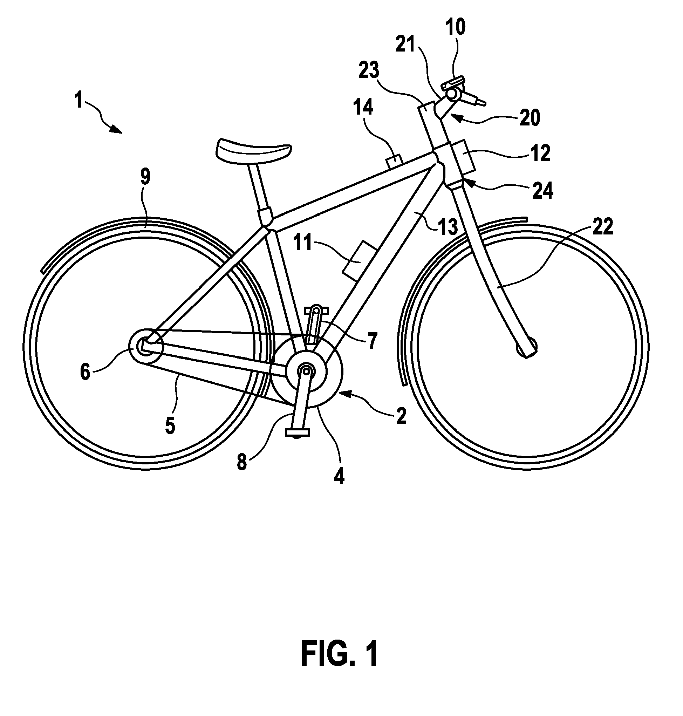

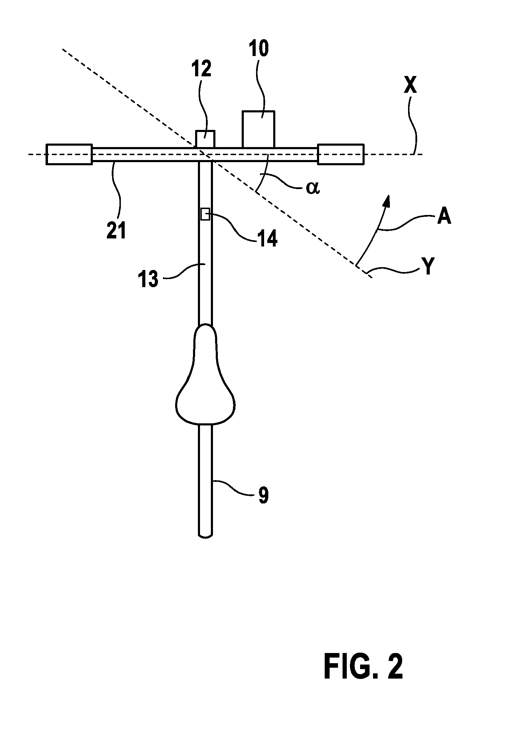

Nachfolgend wird unter Bezugnahme auf die Figuren 1 und 2 ein Fahrrad 1 gemäß einem ersten bevorzugten Ausführungsbeispiel der Erfindung im Detail beschrieben.

Wie aus Figur 1 ersichtlich ist, umfasst das Fahrrad 1 einen Kurbeltrieb 2 mit zwei Kurbeln 7, 8, an denen Pedale angeordnet sind. Am Hinterrad 9 des Fahrrads ist eine Gangschaltung 6 angeordnet. Eine Kette 5 ist zwischen dem Kurbeltrieb 2 und der Gangschaltung 6 als Abtriebselement vorgesehen.

Das Fahrrad 1 umfasst ferner eine Lenkanordnung 20 mit einem Lenker 21, einer Gabel 22 mit Gabelschaft 23 und einem Lenkerlager 24. Das Lenkerlager 24 lagert den Gabelschaft 23 an einem Rahmen 13 des Fahrrads.

Ferner umfasst das Fahrrad 1 einen ersten elektrischen Antrieb 12, welcher am Lenkerlager 24 angeordnet ist. Der erste elektrische Antrieb 12 ist in der Lage, den Gabelschaft 23 um seine Längsachse zu drehen. Der erste elektrische Antrieb 12 ist mit einer Stromversorgungseinrichtung 11 verbunden sowie einer Steuereinheit 10, welche am Lenker 21 angeordnet ist. Es sei angemerkt, dass die Steuereinheit 10 auch in den ersten elektrischen Antrieb 12 integriert sein kann.

Am Rahmen 13 des Fahrrads 1 ist ferner ein Beschleunigungssensor 14 angeordnet, welcher in drei Achsen Beschleunigungen des Fahrrads erfassen kann, wobei insbesondere Querbeschleunigungen des Fahrrads direkt mit Lenkbewegungen des Fahrers zusammenhängen. Der Beschleunigungssensor kann auch an anderer Stelle des Fahrrads, z. B. am Lenker, angeordnet sein. Anhand der Querbeschleunigung kann somit beispielsweise eine Lenkerstellung, wie in Figur 2 durch die gestrichelte Linie Y angedeutet, über den Beschleunigungssensor 14 und die Steuereinheit 10 erfasst werden. Die gestrichelte Linie X zeigt dabei die Neutralstellung des Lenkers bei einer Geradeausfahrt. Hierbei ergibt sich zwischen den gestrichelten Linien X und Y ein eingeschlagener Lenkwinkel α, welcher mit Hilfe des Beschleunigungssensors 14 erfasst oder geschätzt werden kann.

Die Steuereinheit 10 kann nun anhand der Beschleunigungswerte bestimmen, ob ein Lenkeinschlag (Winkel α) des Lenkers 21 einen kritischen Wert überschreitet oder nicht. Sollte der Lenkeinschlag einen kritischen Wert übersteigen, aktiviert die Steuereinheit 10 den ersten elektrischen Antrieb 12, um eine entgegengesetzte Drehbewegung auf die Lenkanordnung auszuüben (siehe Pfeil A in Figur 2).

Somit kann erfindungsgemäß durch den ersten elektrischen Antrieb 12 eine Gegenbewegung zu der erfassten kritischen Lenkbewegung ausgeführt werden, welche automatisch bei Überschreiten eines als kritisch eingestuften Fahrzustands des Fahrrads ausgeführt wird.

Alternativ oder zusätzlich kann statt des Beschleunigungssensors 14 beispielsweise auch ein Lenkwinkelsensor unmittelbar am Lenkerlager 24 angeordnet werden.

Weiterhin ist es auch möglich, dass die Steuereinheit 10, basierend auf weiteren Fahrraddaten, beispielsweise eine sensierte oder geschätzte Fahrgeschwindigkeit des Fahrrads und/oder eines Gewichts eines Fahrers und Fahrrads, eine automatische Lenkbewegung ausführt, um kritische Fahrsituationen zu vermeiden und der kritische Lenkwinkel α variabel in Abhängigkeit der weiteren Fahrraddaten bestimmt wird.

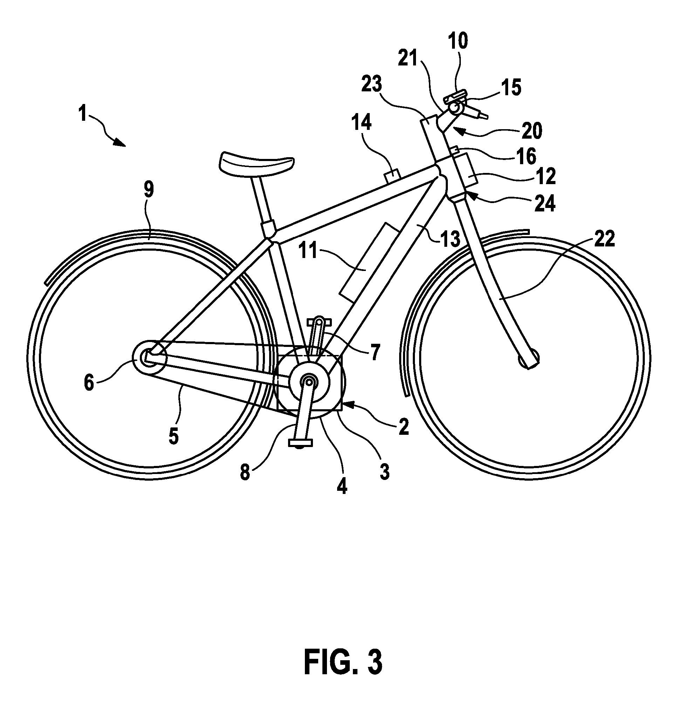

Figur 3 zeigt ein Fahrrad 1 gemäß einem zweiten Ausführungsbeispiel der Erfindung. Das Fahrrad des zweiten Ausführungsbeispiels ist dabei ein Elektrofahrrad und umfasst zusätzlich einen zweiten elektrischen Antrieb 3. Der zweite elektrische Antrieb 3 ist im Bereich des Kurbeltriebs 2 angeordnet, so dass es sich bei diesem Elektrofahrrad um ein Fahrrad mit sogenanntem Mittelmotorkonzept handelt. Die Steuereinheit 10 ist wiederum am Lenker 21 angeordnet und steuert sowohl den ersten elektrischen Antrieb 12 als auch den zweiten elektrischen Antrieb 3. Der zweite elektrische Antrieb 3 dient dabei der bedarfsabhängigen Zuschaltung für den Antrieb des Fahrrads. Hierbei werden der erste elektrische Antrieb 12 und der zweite elektrische Antrieb 13 von einer gemeinsamen Stromversorgungseinrichtung 11 versorgt.

Das Elektrofahrrad von Figur 3 umfasst ferner noch eine sogenannte Schiebehilfe, wobei am Lenker 21 ein Knopf 15 für die Schiebehilfe angeordnet ist. Die Schiebehilfe ist dabei derart ausgelegt, dass bei Betätigung des Knopfs 15 der zweite elektrische Antrieb 3 betätigt wird, um eine konstante Unterstützung des Elektrofahrrads bis zu einer vorbestimmten Grenze, insbesondere 6 km/h, bereitzustellen. Da erfindungsgemäß nun der erste elektrische Antrieb 12 zum automatischen Lenkeingriff bei kritischen Fahrsituationen vorhanden ist, kann beispielsweise der Knopf 15 für die Schiebehilfe einhändig betätigt werden und die Schiebehilfe auch bei erschwerten Bedingungen, beispielsweise wenn das Fahrrad nur mit einer Hand geschoben wird und die andere Hand nicht frei ist, genutzt werden.

Weiterhin ist beim zweiten Ausführungsbeispiel am Gabelschaft 23 eine Vibrationseinrichtung 16 angeordnet. Die Vibrationseinrichtung 16 lässt dabei den Gabelschaft mitsamt dem Lenker 21 vibrieren. Die Vibrationseinrichtung 16 wird dabei vorzugsweise vom ersten elektrischen Antrieb 12 angetrieben. Alternativ ist die Vibrationseinrichtung in den ersten elektrischen Antrieb 12 integriert und das Vibrieren wird z. B. durch kurze entgegengesetzte Drehbewegungen mit sehr kleiner Amplitude des ersten elektrischen Antriebs erzeugt. Die Vibrationseinrichtung 16 kann dabei eingesetzt werden, um einen Fahrer beispielsweise kurz vor Erreichen einer kritischen Fahrsituation einen Hinweis zu geben, dass nun gleich eine kritische Fahrsituation erreicht wird, wenn der Fahrer beispielsweise den Lenker weiter einschlägt. Hierdurch kann dem Fahrer über den Lenker 21 eine taktile Information gegeben werden, ohne dass der Fahrer dabei auf ein Display oder dergleichen schauen muss.

Zu beiden Ausführungsbeispielen sei somit angemerkt, dass durch einen aktiven Lenkeingriff mittels der Steuereinheit 10 eine Gefahrensituation für einen Fahrer des Fahrrads deutlich reduziert werden kann. Insbesondere in Verbindung mit einem Elektrofahrrad müssen kaum zusätzliche Bauteile vorgesehen werden, sondern der erste elektrische Antrieb 12 kann lediglich z.B. am Lenkerlager 24 angeordnet werden. Erfindungsgemäß können somit ungewollte Schlingerbewegungen oder dergleichen, welche zu einem Sturz des Fahrers führen können, vermieden werden. Weiterhin wird erfindungsgemäß durch die Vibrationseinrichtung ein neuer Informationskanal für den Fahrer geöffnet und somit wird die Bandbreite der Informationsübermittlung an den Fahrer signifikant erhöht.

## Patentansprüche

1. Fahrrad, umfassend
- eine Lenkeranordnung (20) mit einem Lenker (21),
- einen ersten elektrischen Antrieb (12), welcher eine motorisch unterstützte Schwenkbewegung des Lenkers (21) ermöglicht,
- eine Sensoreinrichtung (14), und
- eine Steuereinheit (10), welche eingerichtet ist, den ersten elektrischen Antrieb (12) in Abhängigkeit von Signalen der Sensoreinrichtung (14) derart anzusteuern, dass ein Lenkeingriff mittels des ersten elektrischen Antriebs (12) ausführbar ist.

2. Fahrrad nach Anspruch 1, **dadurch gekennzeichnet, dass** der erste elektrische Antrieb (12) an einem Lenkerlager (24) angeordnet ist.

3. Fahrrad nach einem der vorhergehenden Ansprüche, **dadurch gekennzeichnet, dass** die Sensoreinrichtung (14) einen Beschleunigungssensor und/oder einen Lagesensor, insbesondere einen Lenkwinkelsensor, umfasst.

4. Fahrrad nach einem der vorhergehenden Ansprüche, ferner umfassend eine Vibrationseinrichtung (16), welche ein Vibrieren des Lenkers (21) ermöglicht.

5. Fahrrad nach Anspruch 4, **dadurch gekennzeichnet, dass** die Vibrationseinrichtung (16) am Lenker (21) oder an einem Gabelschaft (23) der Lenkanordnung (20) angeordnet ist oder dass der erste elektrische Antrieb die Vibrationseinrichtung umfasst.

6. Fahrrad nach Anspruch 4 oder 5, **dadurch gekennzeichnet, dass** die Vibrationseinrichtung (16) eingerichtet ist, Vibrationen mit unterschiedlichen Frequenzen zu erzeugen.

7. Fahrrad nach einem der vorhergehenden Ansprüche, ferner umfassend einen zweiten elektrischen Antrieb (3), welcher mit einer Abtriebseinrichtung (4) des Fahrrads verbindbar ist und das Fahrrad antreibt.

8. Fahrrad nach Anspruch 7, **dadurch gekennzeichnet, dass** die Steuereinheit (10) eingerichtet ist, sowohl den ersten elektrischen Antrieb (12) als auch den zweiten elektrischen Antrieb (3) anzusteuern.

9. Fahrrad nach Anspruch 7 oder 8, ferner umfassend eine Schiebehilfe mit einer Betätigungseinrichtung (15), wobei die Steuereinheit (10) eingerichtet ist, den zweiten elektrischen Antrieb (12) bei Betätigung der Betätigungseinrichtung (15) anzutreiben.

10. Verfahren zur Stabilisierung von Lenkbewegungen eines Fahrrads (1), umfassend die Schritte:
- Erfassen einer kritischen Fahrsituation, bei der eine Lenkbewegung vorliegt, und
- Ausführen einer Gegenbewegung zu der erfassten Lenkbewegung, wobei die Gegenbewegung mittels eines, mit einer Lenkanordnung (20) des Fahrrads verbundenen ersten elektrischen Antriebs (12) ausgeführt wird.

11. Verfahren nach Anspruch 10, **dadurch gekennzeichnet, dass** die kritische Fahrsituation mittels einer Sensoreinrichtung (14), insbesondere einem Beschleunigungssensor und/oder einem Lagesensor, erfasst wird.

12. Verfahren nach Anspruch 10 oder 11, **dadurch gekennzeichnet, dass** einem Fahrer eine kritische Fahrsituation, basierend auf einer erfolgten Lenkbewegung, durch ein Vibrieren am Lenker (21) angezeigt wird.

13. Verfahren nach Anspruch 12, **dadurch gekennzeichnet, dass** das Vibrieren kurz vor einem Eingriff der Steuereinheit (10) zur Ausführung der Gegenbewegung mittels des ersten elektrischen Antriebs (12) ausgeführt wird oder dass das Vibrieren rein zu Informationszwecken oder zur Gefahrenanzeige verwendet wird.

14. Verfahren nach einem der Ansprüche 10 bis 13, **dadurch gekennzeichnet, dass** das Fahrrad einen zweiten elektrischen Antrieb (3) zum Antreiben des Fahrrads umfasst und eine gemeinsame Steuereinheit (10) für den ersten und zweiten elektrischen Antrieb (12; 3) vorgesehen ist, wobei die Steuereinheit (10) bei einer erfolgten kritischen Lenkbewegung eine Leistung des zweiten elektrischen Antriebs (3) reduziert oder den zweiten elektrischen Antrieb (3) abschaltet.

15. Verfahren nach Anspruch 14, **dadurch gekennzeichnet, dass** das Fahrrad ferner eine mittels einer Betätigungseinrichtung (15) betätigbare Schiebehilfe umfasst, wobei der erste elektrische Antrieb (12) bei Verwendung der Schiebehilfe das Fahrrad stabilisiert.
